# EUROPEAN PATENT SPECIFICATION

(11) **EP 1 905 674 B1**
(45) Date of publication and mention of the grant of the patent: **14.04.2010**
(21) Application number: 07117248.0
(22) Date of filing: 26.09.2007
(51) Int. Cl.: B62D 35/00

(54) **System for controlling and managing the actions of inflation and deflation of inflatable spoilers for an industrial vehicle**
System zur Steuerung und Verwaltung der Aufblasung und Entlüftung aufblasbarer Spoiler für ein Nutzfahrzeug
Système de contrôle et de gestion des actions de gonflage et de dégonflage des becquets gonflables pour véhicule industriel

(30) Priority: 26.09.2006 IT MI20061820
(43) Date of publication of application: 02.04.2008
(73) Proprietor: IVECO S.p.A., 10156 Torino (IT)
(72) Inventor: Bertozzi, Franco, 10040 Druento (IT); Colombano, Mauro, 15040 Occimiano (IT)
(74) Representative: Borsano, Corrado

(56) References cited:
- EP-A2- 1 595 756
- WO-A-92/19485
- WO-A-2006/091147
- US-A1- 2004 075 298

## Description

The present invention relates to a system for controlling and managing the actions of inflation and deflation of inflatable spoilers for an industrial vehicle.

In the prior art devices known as spoilers are attached to industrial vehicles to deflect the air over the outside of the moving vehicle, to prevent said air from being channelled into the gaps in the vehicle and slowing it down. Spoilers are useful to improve the aerodynamic characteristics of the vehicle, increase energy efficiency and reduce fuel consumption.

One category of spoilers consists of inflatable spoilers, which are controlled so as to inflate in order to fill the gaps in the vehicle, and then deflate and fold away.

An example of this type of inflatable spoiler is described in Italian patent application No. MI2006A001177, filed on 20.06.2006, which relates to a system for completely closing the space between the cab and semi-trailer of an industrial or commercial vehicle, comprising rigid spoilers attached to the side and top edges of the rear of the cab, characterized in that it also comprises inflatable and retractable spoilers, attached to said rigid spoilers as dynamic extensions thereof, and suitable to extend so as to adhere to the front wall of the semi-trailer and completely close the space between the cab and semi-trailer. Moreover said rigid spoilers and said inflatable spoilers are divided into a top part and two side parts, it being possible to open at least one of said side parts, for accessing the space between the cab and the semi-trailer.

Another example of this type of inflatable spoiler is described in Italian patent application No. MI2006A001178 registered on 20.06.2006, which relates to a system for optimizing the aerodynamic characteristics of the rear part of an industrial or commercial vehicle, characterized in that it comprises inflatable and retractable spoilers on the entire surface of the rear profile of the body of the vehicle or of the trailer or semi-trailer. Moreover said spoilers comprise top spoilers, side spoilers, bottom spoilers, that are split along the lines dividing the wings of the rear doors giving access to the inside of the body of the vehicle or of the trailer or semi-trailer, so as to allow the doors to be opened separately.

*Another example of this type of inflatable spoiler is described on International Patent application n.* WO 9219485 A1*, which discloses a generic system for controlling and managing the actions of inflation and deflation of inflatable spoilers for an industrial vehicle, said inflatable spoilers being made up of sub-systems, the system being able to monitor the variations in the speed of the vehicle as this increases and decreases, and generate one or more independent "inflation" signals, and one or more independent "deflation" signals, to be sent to one or more of said inflatable spoiler sub-systems, upon reaching vehicle speed thresholds, for "inflation" and "deflation" respectively, the speed thresholds for "inflation" being higher than said speed thresholds for "deflation".*

*Moreover, from International Patent application n.* WO 2006091147 A1*, it's known an adjustment of rigid spoilers of a vehicle depending on the speed of the vehicle.*

The purpose of the present invention is to describe a system for controlling and managing the actions of inflation and deflation of inflatable spoilers for an industrial vehicle, which is particularly optimized to send command impulses to the pneumatic circuit suitable to supply air to inflate and deflate the spoilers.

The present invention relates to a system for controlling and managing the actions of inflation and deflation of inflatable spoilers for an industrial vehicle, said inflatable spoilers being made up of sub-systems, *the system being able to perform the following steps:* monitor variations in the speed of the vehicle as this increases and decreases, and generate one or more independent "inflation" signals and one or more independent "deflation" signals, to be sent to one or more of said inflatable spoiler sub-systems, upon reaching vehicle speed thresholds, for "inflation" and "deflation" respectively, said speed thresholds for "inflation" being higher than said speed thresholds for "deflation"; *the system being characterized in that it sends said "inflation" and "deflation" signals with subsequent delays at least equal to the time needed to complete an operation to inflate or deflate a spoiler sub-system.*

In particular the present invention relates to a system for controlling and managing the actions of inflation and deflation of inflatable spoilers for an industrial vehicle, as described more fully in the appended claims.

Further purposes and advantages of this invention will become clear from the following detailed description of an exemplified embodiment (and the alternative embodiments), and from the drawings that are attached hereto, to be construed as merely illustrative and not limitative, in which:

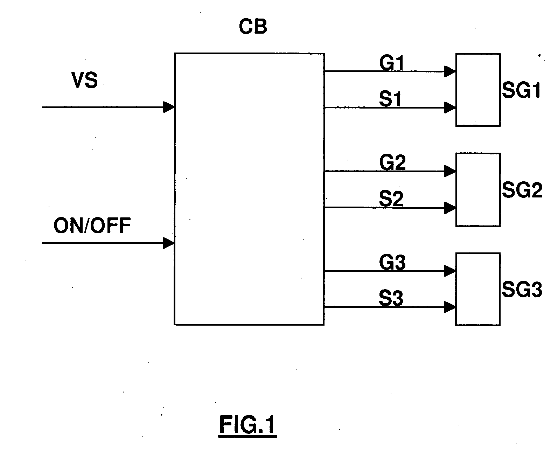

figure 1 shows a block diagram of the control system according to the present invention.

An input on the control system CB receives a signal VS indicating the speed of the vehicle, for example a signal already available on the CAN bus, of a type that is known, through which various signals are sent from and to the vehicle's electronic control units.

The control system CB is able to monitor variations in the speed of the vehicle as this increases and decreases.

The control system CB also receives an ON/OFF command signal sent manually from the vehicle's instrument panel.

The control system CB is able to generate one or more independent "inflation" signals G1, G2, G3, and one or more independent "deflation" signals S1, S2, S3, to be sent to one or more independent inflatable spoiler sub-systems.

In the non-limiting example of the patent applications mentioned above, there is a sub-system SG1 comprising a top part of a front spoiler; another sub-system SG2 comprising the side sections of the front spoiler; another sub-system SG3 comprising a rear spoiler.

Each sub-system receives a separate "inflation" signal and "deflation" signal when the vehicle reaches appropriate speed thresholds. The speed threshold for inflation is higher than that for deflation to avoid frequent inflation/deflation operations as a result of frequent accelerations and decelerations on ordinary roads, in busy traffic conditions or where there are traffic-lights. The "motorway traffic" condition is the ideal condition for managing the control system.

When the engine is started, or when the vehicle moves off from a standstill, at less than a first minimum speed threshold (e.g. 5 km/h), the system does not emit any signals. This is to make sure that the stopped condition or the travelling condition, with all systems (in this particular case the pneumatic circuit) in the running condition, has stabilized.

When said minimum speed threshold is reached, the system emits a "deflation" signal S1, S2, S3 to all the sub-systems, to ensure that all spoilers are deflated and closed when the vehicle sets off.

As the speed of the vehicle increases, at a certain inflation threshold value, for example upon reaching a speed of 80 km/h, the system emits an inflation signal G1, G2, G3 for each sub-system, with a progressive delay between the signals, starting from a zero delay for the first sub-system, for example SG1. The inflation signal G2 is sent to the second sub-system, for example SG2, after a given delay with respect to G1, for example of approx. 70 seconds, after which the inflation signal G3 is sent with the same delay with respect to G2.

The various inflatable spoiler sub-systems may also have different inflation speed thresholds.

As the speed of the vehicle decreases, at a certain deflation threshold value, for example 50 km/h or 40 km/h, lower than the inflation threshold value, the system CB starts sending the deflation signals S1, S2, S3, with a progressive delays.

For example first the deflation signals S1 and S2 are emitted for the front spoiler sub-systems, to facilitate any operations to manoeuvre the vehicle at low speeds, during which these spoilers should preferably be closed and folded away, to prevent any adjacent parts from rubbing against or "sticking" into one another.

The various inflatable spoiler sub-systems may also have different deflation speed thresholds.

For example for the rear spoiler sub-system the threshold value is lower, for example 20 km/h. Moreover the relative signal S3 is only sent when the operations to deflate the other front sub-systems have been completed, to avoid any overlapping of effects.

The lower threshold value for the rear spoiler sub-system is due, for example, to the fact that the relating deflaction is substantially necessary only when the vehicle is stopped, to allow a possible opening of the rear doorsof the semi-trailer by the operator.

Subsequent delays in sending the "inflation" and "deflation" signals are at least equal to the time needed to complete an operation to inflate or deflate a spoiler sub-system, and thus have the purpose of preventing the overloading of the pneumatic circuit, which can thus more easily deliver pressurized air to the inflatable spoilers, at a lower load for a longer time given by the sum of the subsequent delays.

The function of the manual ON/OFF command is to manually activate or deactivate the automatic system as follows.

With a manual OFF command the control system CB sends a deflation pulse to all the sub-systems, as described above, and enters a stand-by condition in which the automatic inflation and deflation control system described above is deactivated.

With an ON command the automatic inflation and deflation control system described above is reactivated.

From the description set forth above it will be possible for the person skilled in the art to embody the invention without introducing any further construction details, in that the control system CB can be implemented with a computer program, according to ordinary methods of programming the electronic control units of vehicles.

This invention can be implemented advantageously in a computer program comprising program code means for performing one or more steps of the method, when said program is run on a computer. For this reason the patent shall also cover said computer program and the computer-readable means that comprise a recorded message, said computer-readable means comprising the program code means for performing one or more steps of the method, when said program is run on a computer.

## Claims

1. System for controlling and managing the actions of inflation and deflation of inflatable spoilers for an industrial vehicle, said inflatable spoilers being made up of sub-systems, *the system being able to perform the following steps:* monitor the variations in the speed of the vehicle as this increases and decreases, and generate one or more independent "inflation" signals (G1, G2, G3), and one or more independent "deflation" signals (S1, S2, S3), to be sent to one or more of said inflatable spoiler sub-systems, upon reaching vehicle speed thresholds, for "inflation" and "deflation" respectively, said speed thresholds for "inflation" being higher than said speed thresholds for "deflation"; *the system being **characterized in that** it sends said "inflation" and "deflation" signals with subsequent delays at least equal to the time needed to complete an operation to inflate or deflate a spoiler sub-system.*

2. System for controlling and managing the actions of inflation and deflation of inflatable spoilers for an industrial vehicle according to claim 1, **characterized in that** said vehicle speed thresholds for "inflation" or for "deflation" are different for different inflatable spoiler sub-systems.

3. System for controlling and managing the actions of inflation and deflation of inflatable spoilers for an industrial vehicle according to any of the previous claims, **characterized in that** it does not send any signals below a minimum speed threshold, and that when said minimum threshold value is reached, it sends a "deflation" signal (S1, S2, S3) to all the sub-systems.

4. System for controlling and managing the actions of inflation and deflation of inflatable spoilers for an industrial vehicle according to any of the previous claims, **characterized in that** it is able to manage a manual command of the ON/OFF type the function of which is to manually activate or deactivate the control system, so that when a manual OFF command is sent the control system CB sends a deflation signal to all the spoiler sub-systems, and enters a stand-by condition in which the automatic inflation and deflation control system is deactivated, and when an ON command is sent the automatic inflation and deflation control system is reactivated.

5. Computer program comprising program code means for performing the steps in claims 1 to 4, when said program is run on a computer.

6. Computer-readable means comprising a recorded program, such computer-readable means comprising the program code means suitable to perform the steps in claims 1 to 4, when said program is run on a computer.

## Patentansprüche

1. System zum Steuern und Lenken der Schritte des Aufblasens und Entleerens aufblasbarer Spoiler für ein Industriefahrzeug, wobei die aufblasbaren Spoiler aus Sub-Systemen bestehen, wobei das System in der Lage ist, die folgenden Schritte durchzuführen:
Überwachen der Veränderungen der Geschwindigkeit des Fahrzeugs, wenn diese steigt oder sinkt, und Erzeugen eines oder mehrerer unabhängiger "Aufblasen"-Signale (G1, G2, G3) und eines oder mehrerer unabhängiger "Entleeren"-Signale (S1, S2, S3), die an eines oder mehrere der aufblasbaren Spoiler-Sub-Systeme bei Erreichen von Fahrzeug-Geschwindigkeitsgrenzwerten für ein "Aufblasen" bzw. "Entleeren" zu senden sind, wobei die Geschwindigkeitsgrenzwerte für "Aufblasen" höher sind als die Geschwindigkeitsgrenzwerte für "Entleeren"; wobei das System **dadurch gekennzeichnet ist, dass** es die "Aufblasen"- und "Entleeren"-Signale mit nachfolgenden Verzögerungen sendet, die wenigstens gleich der Zeit sind, die benötigt wird, um einen Schritt des Aufblasens oder Entleerens eines Spoiler-Sub-Systems zu vervollständigen.

2. System zum Steuern und Lenken der Schritte des Aufblasens und Entleerens von aufblasbaren Spoilern für ein Industriefahrzeug nach Anspruch 1, **dadurch gekennzeichnet, dass** die Fahrzeug-Geschwindigkeitsgrenzwerte für "Aufblasen" oder für "Entleeren" für verschiedene aufblasbare Spoiler-Sub-Systeme unterschiedlich sind.

3. System zum Steuern und Lenken der Schritte des Aufblasens und Entleerens von aufblasbaren Spoilern für ein Industriefahrzeug nach irgendeinem der vorangehenden Ansprüche, **dadurch gekennzeichnet, dass** es nicht irgendwelche Signale unterhalb eines Mindest-Geschwindigkeitsgrenzwertes sendet, und dass dann, wenn der Mindest-Grenzwert erreicht wird, es ein "Entleeren"-Signal (S1, S2, S3) an alle Sub-Systeme sendet.

4. System zum Steuern und Lenken der Schritte des Aufblasens und Entleerens von aufblasbaren Spoilern für ein Industriefahrzeug nach irgendeinem der vorangehenden Ansprüche, **dadurch gekennzeichnet, dass** es in der Lage ist, ein manuelles Kommando des EIN/AUS-Typs zu verarbeiten, dessen Funktion es ist, das Steuerungs-System manuell zu aktivieren oder zu deaktivieren, so dass dann, wenn ein manuelles AUS-Kommando gesendet wird, das Steuerungssystem CB ein "Entleeren"-Signal an alle Spoiler-Sub-Systeme sendet und in einen Stand-By- (bzw. Bereitschafts-) Zustand eintritt, in dem das automatische Steuerungssystem zum Aufblasen und Entleeren deaktiviert ist, und dass dann, wenn ein EIN-Kommando gesendet wird, das automatische Steuerungssystem zum Aufblasen und Entleeren deaktiviert wird.

5. Computerprogramm, umfassend Programm-Code-Einrichtunge zum Durchführen der Schritte in den Patentansprüchen 1 bis 4, wenn das Programm auf einem Computer laufengelassen wird.

6. Computer-lesbare Einrichtung, umfassend ein aufgezeichnetes Programm, wobei eine derartige Computer-lesbare Einrichtung die Programm-Code-Einrichtungen umfasst, die geeignet sind, um die Schritte in den Patentansprüchen 1 bis 4 durchzuführen, wenn das Programm auf einem Computer laufengelassen wird.

## Revendications

1. Système de contrôle et de gestion des actions de gonflage et de dégonflage de becquets gonflables pour un véhicule industriel, lesdits becquets gonflables étant constitués de sous-systèmes, le système étant apte à exécuter les étapes suivantes: surveiller les variations dans la vitesse du véhicule lorsque celle-ci augmente et diminue, et produire un ou plusieurs signaux de "gonflage" indépendants (G1, G2, G3), et un ou plusieurs signaux de "dégonflage" indépendants (S1, S2, S3), à envoyer à un ou plusieurs desdits sous-systèmes de becquets gonflables, lors de l'atteinte de seuils de vitesse du véhicule, pour le "gonflage" et "dégonflage" respectivement, lesdits seuils de vitesse pour le "gonflage" étant plus élevés que lesdits seuils de vitesse pour le "dégonflage"; le système étant **caractérisé en ce qu'**il transmet lesdits signaux de "gonflage" et de "dégonflage" avec des délais suivants au moins égaux au temps nécessaire pour achever une opération pour gonfler ou dégonfler un sous-système de becquets.

2. Système de contrôle et de gestion des actions de gonflage et de dégonflage de becquets gonflables pour un véhicule industriel selon la revendication 1, **caractérisé en ce que** lesdits seuils de vitesse de véhicule pour le "gonflage" ou pour le "dégonflage" sont différents pour différents sous-systèmes de becquets gonflables.

3. Système de contrôle et de gestion des actions de gonflage et de dégonflage selon l'une quelconque des revendications précédentes, **caractérisé en ce qu'**il ne transmet pas de signaux en dessous d'un seuil de vitesse minimum, et **en ce que**, lorsque ladite valeur de seuil minimum est atteinte, il transmet un signal de "dégonflage" (S1, S2, S3) à tous les sous-systèmes.

4. Système de contrôle et de gestion des actions de gonflage et de dégonflage selon l'une quelconque des revendications précédentes, **caractérisé en ce qu'**il est apte à gérer une instruction manuelle du type marche/arrêt dont la fonction est d'activer ou de désactiver manuellement le système de contrôle de sorte que lorsqu'une commande manuelle d'arrêt est transmise, le système de contrôle CB transmet un signal de dégonflage à tous les sous-systèmes de becquets et entre dans un état d'attente dans lequel le système de contrôle de gonflage et de dégonflage automatique est désactivé, et lorsqu'une commande marche est transmise, le système de contrôle automatique de gonflage et de dégonflage est réactivé.

5. Programme informatique comprenant un moyen de code programme pour exécuter les étapes dans les revendications 1 à 4, lorsque ledit programme est exécuté sur un ordinateur.

6. Moyen lisible par ordinateur comprenant un programme enregistré, un tel moyen lisible par ordinateur comprenant le moyen de code programme apte à exécuter les étapes dans les revendications 1 à 4 lorsque ledit programme est exécuté sur un ordinateur.
